(19) **Europäisches Patentamt European Patent Office Office européen des brevets**

(11) **EP 4 274 206 A1**

(12) **EUROPEAN PATENT APPLICATION**

(43) Date of publication:
**08.11.2023 Bulletin 2023/45**

(21) Application number: **22171596.4**

(22) Date of filing: **04.05.2022**

(51) International Patent Classification (IPC):
***H04N 1/60*** (2006.01)    ***H04N 1/54*** (2006.01)

(52) Cooperative Patent Classification (CPC):
**H04N 1/54; H04N 1/60; H04N 1/6008;**
**H04N 1/6019; H04N 1/6027; H04N 1/6038;**
**H04N 1/6058;** H04N 1/605

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Canon Production Printing Holding B.V.**
**5914 HH Venlo (NL)**

(72) Inventors:
- **FRIJNTS, Tim**
  **Venlo (NL)**
- **KLEIN KOERKAMP, Koen J.**
  **Venlo (NL)**
- **SEVENICH, Johannes B. M.**
  **Venlo (NL)**

(74) Representative: **Canon Production Printing IP Department**
**Canon Production Printing Netherlands B.V.**
**Van der Grintenstraat 10**
**5914 HH Venlo (NL)**

(54) **MATCHING COLOURS FOR MULTIPLE PRINT MODES**

(57)    Method for matching colours between different print modes in a printing system, the method comprising the steps of: when printing in a first print mode, mapping colours specified in first image data to colours to be specified in second image data according to a first mapping; and when printing in a second print mode, mapping colours specified in the first image data to colours to be specified in the second image data by applying a correction mapping in conjunction with the first mapping.

FIG. 4

## Description

## Background of the Invention

The present invention relates to a method for matching colours between different print modes in a printing system.

The present invention further relates to a computer program product for matching colours between different print modes in a printing system.

The present invention also relates to a printing system comprising a colour management module configured to perform a colour mapping operation on first image data to be printed.

In digital printers a print mode determines the parameters of the printing process. For example: in an inkjet printer the height of the print head above the media belt is changed depending on the width of print media; in an EPG printer the fuser temperature is changed depending on the "weight" (g/m$^2$) of the media. The print mode not only depends on the media to be printed on, but also on the ink being used and operational parameters. For example, an inkjet printer may have a "high quality" operational mode for printing in multi-pass mode to produce high quality prints and a "draft quality" operational mode for printing in single-pass mode to produce lower quality prints with higher productivity. A print mode for the operational mode "high quality" printing would specify multi-pass printing as parameter while the operational mode "draft quality" would specify single-pass printing (with additional related parameters).

Professional production printers that print on a wide range of media have a multitude of print modes defined to print on different media in different operational modes.

The print mode influences colour reproduction. A printer user expects the same or similar colour reproduction regardless of the print mode used (within the constraints of media and ink used of course). Therefore, each print mode typically has its own corresponding colour profile associated with it.

In the graphic arts industry a level of glossiness of a printed product is a know specification. It is known that different amounts of glossiness can be achieved in various ways, for example by using print media with different levels of glossiness, by using different inks, and by applying varnish to the printed surface.

Another known way of influencing glossiness in a printed product is by varying curing parameters when a curing ink print process is used. By varying curing parameters it is also possible to have varying levels of glossiness in a single printed product. Different levels of glossiness may be obtained through different print modes defining the curing parameters.

A problem with the prior art is that different print modes result in different colour reproduction. Therefore, colour reproduction is not consistent over different print modes.

The present invention has as an object to overcome or at least mitigate this disadvantage.

## Summary of the Invention

The object of the invention is obtained in a first aspect of the present invention by providing a method for matching colours between different print modes in a printing system, the method comprising the steps of: when printing in a first print mode, mapping colours specified in first image data to colours to be specified in second image data according to a first mapping; and when printing in a second print mode, mapping colours specified in first image data to colours to be specified in the second image data by applying a correction mapping in conjunction with the first mapping.

The first mapping serves its normal role as known in the prior art to map the colours as defined in the first image data according to the colour profile for the first print mode.

The correction mapping does not directly map colours according to the colour profile for the second print mode, but instead models a difference between the colour reproduction of the first print mode and the colour reproduction of the second print mode.

So to obtain the correct colours for the second print mode the colours are mapped as if the first print mode was being used, but corrected according to the correction mapping in order to get the correct colours for the second print mode such that a colour specified in the first image data reproduces in print similar regardless whether printed according to the first print mode or the second print mode.

The feature that the correction mapping is applied *in conjunction* with the first mapping means that in the second print mode the first mapping is not applied solely, nor is the correction mapping applied solely. Both are applied (in conjunction) to the first image data to obtain the second image data. This may be done in different ways. For example, the first mapping $f_1$ may be applied to the first image data to obtain intermediate image data whereafter the correction mapping $f_c$ is applied to the intermediate image data to obtain the second image data (in function notation: $f_c \circ f_1$, where $\circ$ is the composition operator). Another example is the other way around: first the correction mapping $f_c$ is applied to the first image data to obtain intermediate image data whereafter the first mapping $f_1$ is applied to the intermediate image data to obtain the second image data (in function notation: $f_1 \circ f_c$). In another example a linear combination of the first mapping $f_1$ and the correction mapping $f_c$ is applied.

In a further aspect according to the invention a method is provided wherein the printing system switches between the first and second print mode during the printing of a print job. The print job comprises two or more parts wherein each part is printed with a corresponding print mode and the printer selects the correct print mode for each part that is to be printed. For example, if a printed product is to be proofed by different persons, one being responsible for proofing artwork and another for proofing the typesetting of the text, the two proofers could be sent different versions: the first one receives a copy where all illustrations and other artwork are printed in a "high quality" operational mode and text being printed in a "draft quality" operational mode, while the second receives a copy where all illustrations and other artwork are printed in the "draft quality" operational mode and the the text being printed in a "high quality" operational mode.

During the printing of the job, the printer will be switching from a first to a second print mode and optionally back to the first print mode or even to another print mode. As the different print modes are used in a single print job, the customer of the printed product will most likely expect the same print modes to render the same colours identically or perceptually almost indistinguishably.

In another aspect of the invention a method is provided, wherein the printing system switches between the first and second print mode during printing of an image.

An *image* in this context means an amount of image data that is handled by the printer controller as a unit of image data that is printed as a single unit. Typically this relates to image data corresponding to a single raster image as output by the RIP (Raster Image Processor). For a cut sheet printer this is typically a single page. For continuous feed printers such as roll printers an *image* is typically a single print job, which may comprise a single image submitted to be printed, or multiple images that are printed together in a nested fashion. For a table printer, an *image* typically corresponds to all images printed in a single print job. For a web fed printer an *image* typically corresponds to a single page or a group of pages printed together (for example a printer's spread or a signature).

During the printing of the image, the printer will be switching from a first to a second print mode and optionally back to the first print mode or even to another print mode. As the different print modes are used in a single image, the customer of the printed product will most likely expect the same print modes to render the same colours identically or perceptually almost indistinguishably.

Note that it may be necessary for the print engine to print a swath in multiple passes, for example because a print parameter that differs between the print modes cannot be varied during the pass or because the print parameter can only be set for the complete print head. In that case a first pass is used to print in a first print mode and a second pass is used to print in a second print mode, only than will the print engine advance the media (or the gantry) to print a next swath. For some print parameters it may be possible though to drive different parts of a print head with different parameters or even to change the print parameters while the print head is making the pass. In such a case a single pass will suffice to print a swath with different print modes. In one particular embodiment, during printing of multiple print modes at the same time, the print head is subdivided in a first part that is used for printing in a first print mode, and a second part that is used for printing in a second print mode, the media (or gantry) advancements being reduced in accordance with the width of the different parts of the print head. Note that such a split operation mode with different print parameters being used for different parts of the print head can in itself be regarded as a print mode too.

An alternative, although rather expensive embodiment would employ different print heads to print different print modes during a single pass.

In another aspect of the invention a method is provided wherein one or both of the first mapping and the correction mapping is executed as part of at least one of: an image processing step prior to the rasterisation (ripping) of the image, the rasterisation step, and the halftoning step. According to a preferred aspect the correction mapping is implemented in the halftone masks. A more specific embodiment of the latter is described later on.

In again another aspect of the invention a method is provided wherein the correction mapping further comprises a prelinearisation correction.

A prelinearisation correction is a known correction to reduce contouring. Contouring is a colour quantisation artefact that can occur during printing. A smooth colour gradient (or part of such gradient, typically at low optical densities) prints with visual steps in the reproduced colours. The contouring is reduced (or removed) by remapping the colours such that the print colours in the problematic colour range are closer together. The correction mapping according to the invention can be easily combined with the mapping done for the prelinearisation correction. This way no additional computationally expensive step is introduced during the printing process. (A single combined mapping is applied instead of two separate mappings.)

According to a further aspect the first and second print mode distinguish in an amount of glossiness. This allows for printing of an image with more than one glossiness level (spot gloss printing). In other words different parts of the image are printed with different amounts of glossiness. However, colour reproduction is kept identical over the areas with different amounts of glossiness. For example, it allows for printing a coloured area with shapes in the area of different glossiness without the shapes being perceived as having a different colour (in other words, the shapes are only defined by the glossiness, not by a colour difference). The glossiness level may be varied by using different print modes, the print modes setting different curing parameters. The fact that changing glossiness can be achieved by changing curing parameters is known in the art.

In an alternative aspect different glossiness levels are obtained by the second print mode comprising the step of printing varnish.

In a first embodiment, the invention provides a computer program product stored on a computer readable medium that, when executed on a processor comprised in or connected to a printing system, performs any of the above mentioned methods. Examples of such computer program products are RIP software, a printer controller program, and an embedded print engine controller program.

In a second embodiment the invention provides a printing system comprising a colour management module configured to perform a colour mapping operation on first image data to be printed, wherein the colour mapping operation performs for a first print mode a first mapping for mapping colours specified in the first image data to colours to be specified in second image data for printing the first image data according to a first print mode; and for a second print mode a correction mapping for mapping colours and applying the correction mapping in conjunction with the first mapping to map colours specified in the first image data to colours to be specified in the second image data for printing the first image data according to a second print mode.

In a further embodiment the printing system switches between the first and second print mode during the printing of a print job.

Furthermore, according to an embodiment of the invention the printing system switches between the first and second print mode during printing of an image.

In another embodiment according to the invention at least one of the first mapping and the correction mapping is executed as part of at least one of: an image processing step prior to the rasterisation (RIP) of the image, the rasterisation, and the halftoning.

In again another embodiment of the invention the correction mapping further comprises a prelinearisation correction.

The invention further provides an embodiment wherein the print mode determines an amount of glossiness of the image part printed with the print mode.

In another embodiment a printing system is provided wherein the second print mode comprises the step of printing varnish.

**Brief Description of the Drawings**

The present invention will become more fully understood from the detailed description given hereinbelow and the accompanying schematical drawings which are given by way of illustration only, and thus are not limitative of the present invention, and wherein:

Fig. 1 is a diagram showing an exemplary position in the data path in a printing system where the colour mapping according to the invention may be applied.

Fig. 2 is a block diagram showing an exemplary embodiment for implementing the present invention.

Fig. 3 shows an application that can be produced with the present invention.

Fig. 4 is a flow diagram displaying a method according to the present invention.

Fig. 5 shows a graph of (prelinearised) measured optical densities to which the present invention is to be applied.

Fig. 6 shows a graph of the target optical density determined by the present invention.

Fig. 7 shows a correction mapping according to a preferred embodiment of the present invention.

Fig. 8A-D show measured Lightness* responses for four process colours in a printing system according to the present invention.

Fig. 9A-D show measured chroma responses for four process colours in a printing system according to the present invention.

Fig. 10A-D show measured OD responses for four process colours in a printing system according to the present invention.

**Detailed Description of the Invention**

The present invention will now be described with reference to the accompanying drawings, wherein the same reference numerals have been used to identify the same or similar elements throughout the several views.

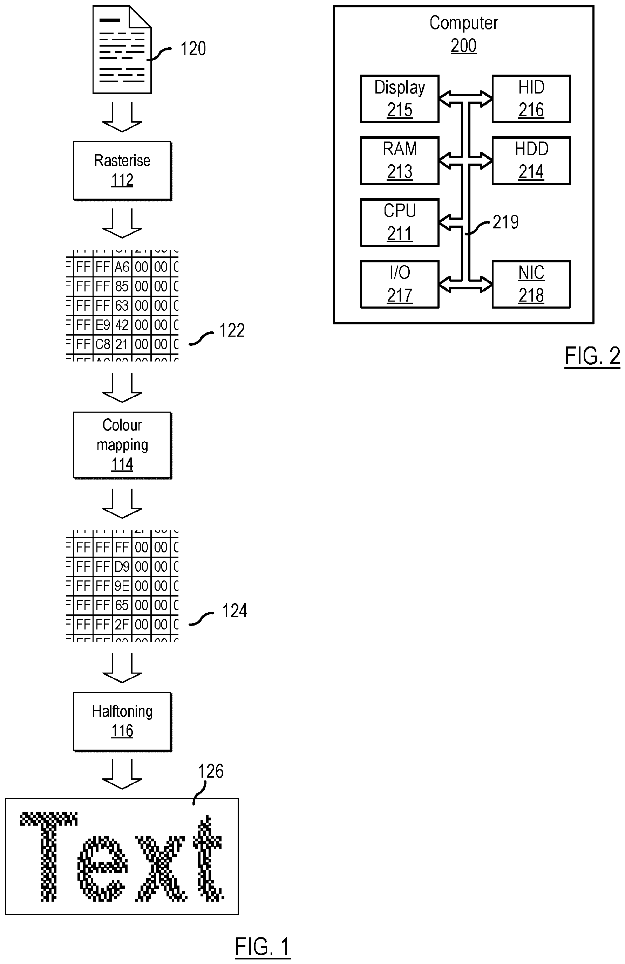

A typical process incorporating colour profiling (Figure 1) starts with a document 120 that describes the print product to be printed in a Page Description Language (PDL). The document 120 is at some point received by a printer controller or print server, for example as a document submitted from a workstation for printing. When the document 120 is ready to be printed, the document 120 is rasterised 112 by a Raster Image Processor (RIP) into a raster image 122. The raster image 122 is basically an array of pixels wherein each pixel contains a value representing the colour of the pixel. The value is a tuple of numbers with a dimension equalling the number of process colours used in the print engine (four for a CMYK print engine), each numeral corresponding to a process colour. The raster image 122 can equally be represented by a tuple of arrays with scalar values. In this case each array corresponds to a single process colour and the array represents the image to be printed in a single colour plane. The raster image 122 in Figure 1 only shows a single colour plane. The other colour planes are not shown. Typically, after rasterising 112, the raster image 122 is subjected to colour mapping 114, resulting in a colour mapped raster image 124. As the original document 120 is typically device independent, and the rasterisation 112 is not print engine specific (apart from print resolution), colour mapping 114 is performed to obtain accurate colours with the specific print engine used for printing. The colour mapping 114 accounts for the influence of and the interaction between the ink, the print media, and print engine specific parameters. Lastly, the colour mapped raster image 124 is subjected to halftoning 116 to obtain the halftone image 126. In case the print engine can only print single sized pixels, the halftone image 126 will be a binary array (per process colour). Figure 1 only shows a single halftone image 126, but there will be a halftone image 126 per process colour. If the print engine is able to create pixels of varying sizes, the halftone image 126 will have multiple bits per pixel to specify a dot size per pixel. As most digital printers have a limited number of dot sizes (typically only one), the halftoning 116 typically comprises a (stochastic) dithering step to obtain the correctly perceived colour.

Although the process of rasterising 112, colour mapping 114, and halftoning 116 may be executed in a workstation of a user submitting a print job to a printer, in production printing environments this process typically takes place in a print server, a printer controller, or an embedded print engine controller. These typically comprise standard, off-the-shelf Personal Computer (PC) components (Figure 2). A computer 200 comprises a non-volatile storage such as Read-Only Memory (not shown) to store firmware such as a BIOS or UEFI that allows the computer 200 to start a boot-up sequence at power up. The boot-up sequence involves reading and executing a bootloader from a non-volatile storage such as a Hard Disk Drive (HDD) 214 or a Solid State Drive (SDD, not shown) to load an Operating System (OS) that controls the operation of the computer 200. The OS reads application software or server software from the HDD 214 or the SDD and initiates the execution thereof.

The application software or server software comprises computer code that makes the computer perform one or more of the rasterisation process 112, the colour mapping 114, and the halftoning 116 as well as the methods according to the inventions, although several processes may be executed by different computers 200. For example, the rasterisation 112 may be executed in a first computer whereafter the raster image 122 is provided to a second computer that performs the colour mapping 114 and the halftoning 116. The computer code (application software, server software, or OS) is loaded into volatile memory (RAM) 213 and executed by a Central Processing Unit (CPU) 211.

Although print servers and embedded print engine controllers are typically headless computers, the printer controller of a printer might be provided with a display 215 and a Human Interface Device 216 to allow a user to interact with the printer through a user interface. A Network Interface Card (NIC) 218 allows the computer 200 to communicate with other computing devices. For example, in the case of a print server or printer controller, print jobs may be received over a network from a workstation. Furthermore, Input/Output modules (I/O) 217 allow the computer 200 to interface with other devices. For example, the embedded print engine controller uses I/O 217 to control actuators such as motors that drive the media transport and switches to divert media sheets in the paper path. Furthermore, it allows the computer 200 to read sensor information such as media position, ink levels, etc.

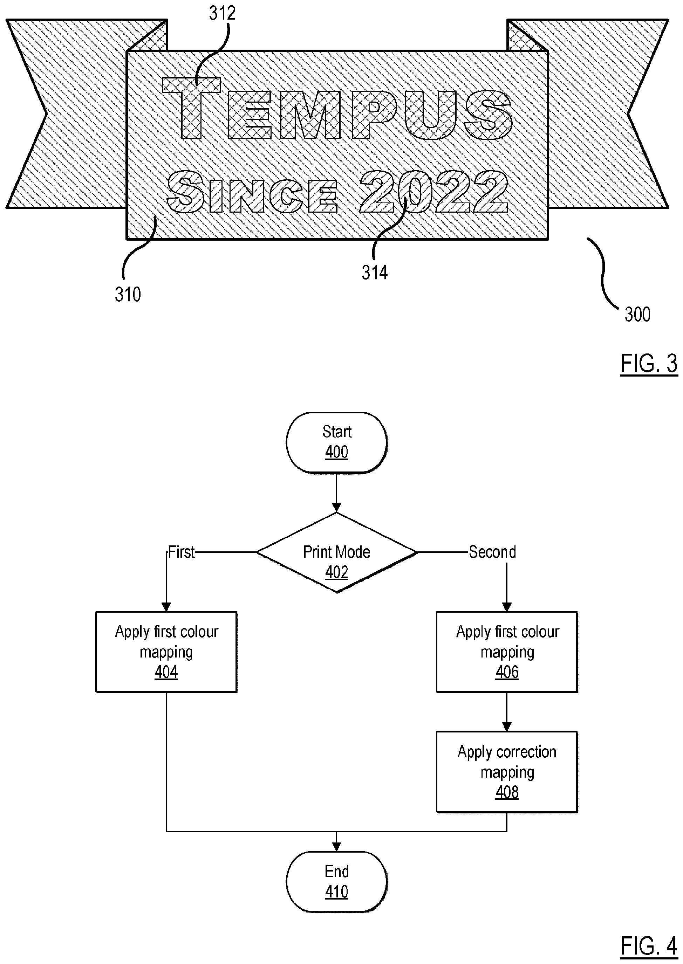

A typical application where the present invention is beneficial is an image as is shown in Figure 3. The image represents a ribbon 300, for example to be applied as a label to a bottle or another product. The ribbon 300 is represented by a first "background" colour 310 representing the fabric of the ribbon 300. A first text 312 is printed in a different colour. A second text 314 is printed in the same colour as the "background" colour 310, however to provide a "luxurious" appearance the second text 314 is printed with a glossy finish whereas the background 310 has a matt finish. As the second text 314 and the background 310 (should) have the same colour, the second text 314 only distinguishes by the glossy finish. The printer may print different glossiness levels by switching between different print modes, the different print modes employing different curing parameters to give the ink a more matt or more glossy finish during the curing process. In order to obtain the same colour for printing the background 310 and the second text 314, different colour profiles need to be applied for the two print modes as the colour reproduction is also affected by the curing parameters.

Instead of having each print mode have its own colour profile, the present invention has at least some print modes share the same colour profile, but account for differences in colour reproduction between the two print modes by means of a correction mapping (Figure 4). This process starts 400 and determines 402 for each part of a print job or image what print mode the job or image parts need to be printed with. In this example, this determination 402 is made for each pixel. However, it is also possible to do this on a level of pixel groups, swaths, or print carriage passes. If it is determined that the print mode to be used is a first print mode ("First"-branch), the process continues with applying 404 a first colour mapping $f_1$ to the job or image part. If however, it is determined that a second print mode ("Second"-branch) is to be used, at first the first colour mapping $f_1$ is applied 406 and subsequently a correction mapping $f_c$ is applied 408. After having applied the colour mappings $f_1$, $f_c$ the process ends 410 for the job or image part being processed currently and the process is repeated for subsequent parts of the job or image, for example the next pixel.

In this example the first print mode corresponds to the print mode for printing the glossy second text 314 (Figure 3) while the second print mode corresponds to the print mode used for the background colour 310 (and the first text 312).

Although it is still necessary for the printer to have two colour mappings (the first colour mapping $f_1$ and the correction colour mapping $f_c$) for correctly printing colours in two print modes, the advantage of this approach is that the first colour mapping $f_1$ captures the influence of variable parameters such as media type, environmental temperature, environment humidity, etc., while the correction mapping $f_c$ captures inherent differences between the two print modes that are to a large extent independent of variable influences. Of course this depends on the two print modes that are linked through the correction colour mapping $f_c$. Applicant has found out that this works particularly well for glossiness levels. The following example will focus on the details where the first and second print mode correspond to different glossiness levels.

This approach allows for a printer to be shipped with a manufacturer provided correction colour mapping $f_c$ (determined based on an initial manufacturer determined first colour mapping $f_1$). Periodic colour calibration of the printer at the customer only requires calibrating the first colour mapping $f_1$ without recalibrating the correction colour mapping $f_c$. In the example using the correction colour mapping $f_c$ for correcting between two glossiness levels, and assuming that there is a matt version and a glossy version for all print modes, this results in the amount of print modes requiring periodical colour calibration being halved as only the first colour mapping $f_1$ needs to be calibrated for the first print mode. Calibration of the correction mapping $f_c$ is not necessary due to this mapping being mainly independent of variable influences such as environmental temperature, environmental humidity, etc.

In order to determine the correction mapping $f_c$, optical density (OD) curves are measured for each process colour (mono-colour OD curves) and for both print modes (the first print mode, glossy printing, and the second print mode, matt printing). The mono-colour OD curves for the first print mode are used as first colour mapping $f_1$. Based on the mono-colour OD curves for the first print mode (gloss printing) and the mono-colour OD curves for the second print mode (matt printing), the correction colour mapping $f_c$ is determined.

The first colour mapping $f_1$ maps the colours of the raster image 122 for use during glossy printing (first print mode). The correction colour mapping $f_c$ is used to map from colour values for glossy printing to colour values for matt printing. The mono-colour OD curve for the second print mode may be considered a target OD curve to be realised through a "second" colour mapping $f_2$ that maps the colour values of the raster image 122 to the colour values for matt printing. Therefore, the correction colour mapping $f_c$ is the mapping that satisfies:

$$f_2 = f_c \circ f_1$$

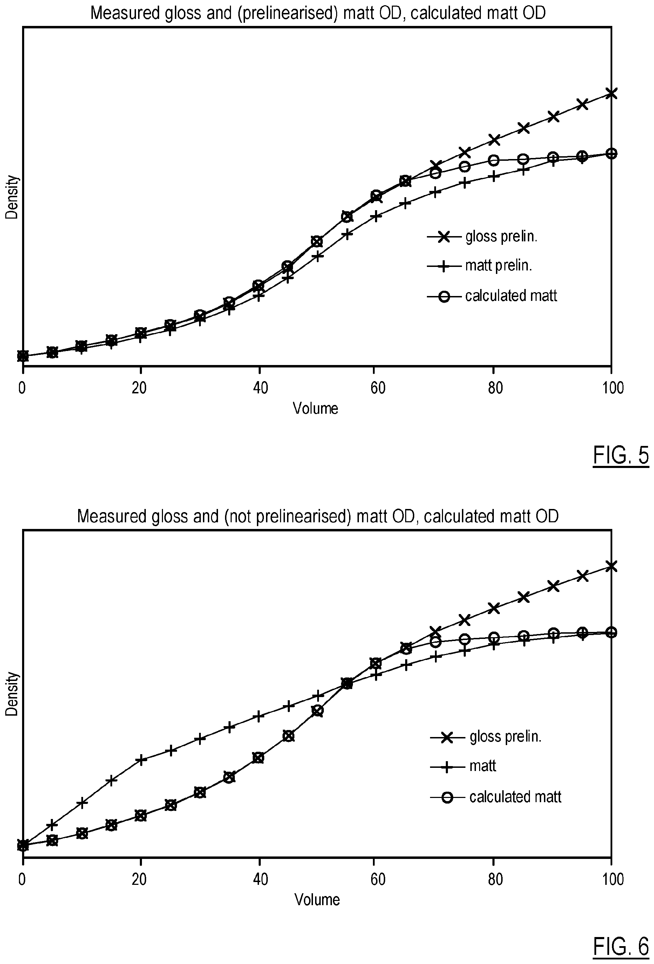

Figure 5 shows measured mono-colour OD-curves for both print modes (gloss printing marked with

"✕" and matt printing marked with "+"). Only the graphs of a single colour are shown. The same principle is applied for all process colours. Note that in these OD-curves a prelinearisation as discussed earlier has already been applied for the lower optical densities.

Subsequently a corrected (i.e. target) OD-curve for matt is determined (marked with "○") to match the OD-curve for matt printing to the OD-curve for gloss printing. It should be noted that at 100% volume, the matt OD-curve cannot reach the higher optical density that the gloss OD-curve reaches. This is a known phenomena. With higher optical densities a wider colour gamut can be obtained. As matching the OD-curve for gloss to the OD-curve for matt would result in the OD-curve for gloss not reaching above the density of matt, this would result in reducing the colour gamut the printer can reproduce (for gloss printing). A compromise has to be made here. On the one hand the maximum optical density of the gloss OD-curve may be limited resulting in a smaller colour gamut (for gloss printing). Alternatively, the matt OD-curve is allowed to deviate from the gloss OD-curve for higher densities resulting in some colour deviations between gloss and matt at high densities. The latter may be quite acceptable as the colours at these high densities are typically quite saturated and colour differences for highly saturated colours are less perceivable. Therefore, in the presented examples some colour deviation at high optical density are allowed in favour of a wider colour gamut for gloss printing. Therefore, the corrected matt OD-curve starts to deviate from the gloss OD-curve at higher densities (in the examples presented this happens above 60% coverage) and finally reaches the maximum density for matt.

Figure 6 shows the same graph as Figure 5, however the matt OD-curve has not been prelinearised. The reason for not prelinearising the matt OD-curve is that colour profiling for matt printing (second print mode) will not be done with an independent colour mapping for matt, but will use the colour mapping for gloss (first print mode) with the correction mapping applied. Prelinearisation is therefore already doen through the colour mapping for gloss and the correction mapping should not apply a second prelinearisation.

The corrected matt OD-curve from Figure 6 is converted to the actual correction mapping that maps the coverages to the coverage that corresponds to the optical density of the corrected matt OD-curve.

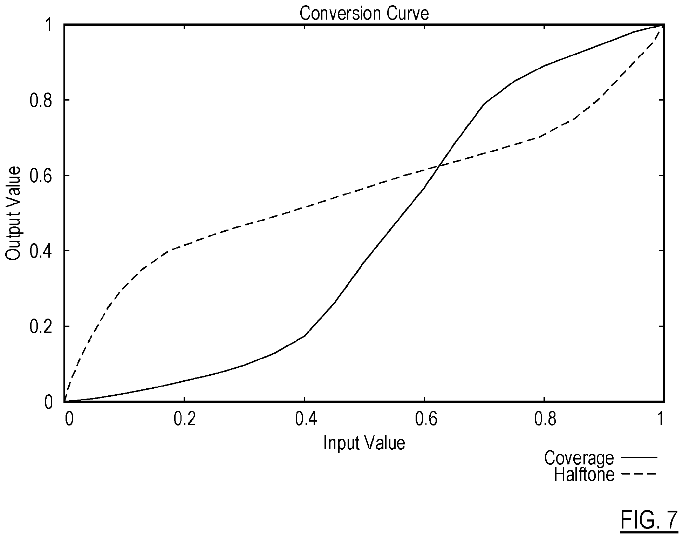

One drawback of such an embodiment is that the colour profiles typically have a bit width of 8-bits, which is a rather low resolution for the correction mapping. In an alternative embodiment, the correction mapping is applied as part of the 16-bit halftone masks. Figure 7 shows the curve for the correction mapping (solid line). The halftone value correction curve (dashed line) is obtained by exchanging the x- and y-axes and interpolating to 16-bit resolution.

Note that this expansion of resolution to a domain with more than 8 bit may also be performed at a separate correction mapping step, however, if the halftone masks are already more than 8 bit (for example 16 bit) combining the correction mapping with the halftone masks removes a computational step.

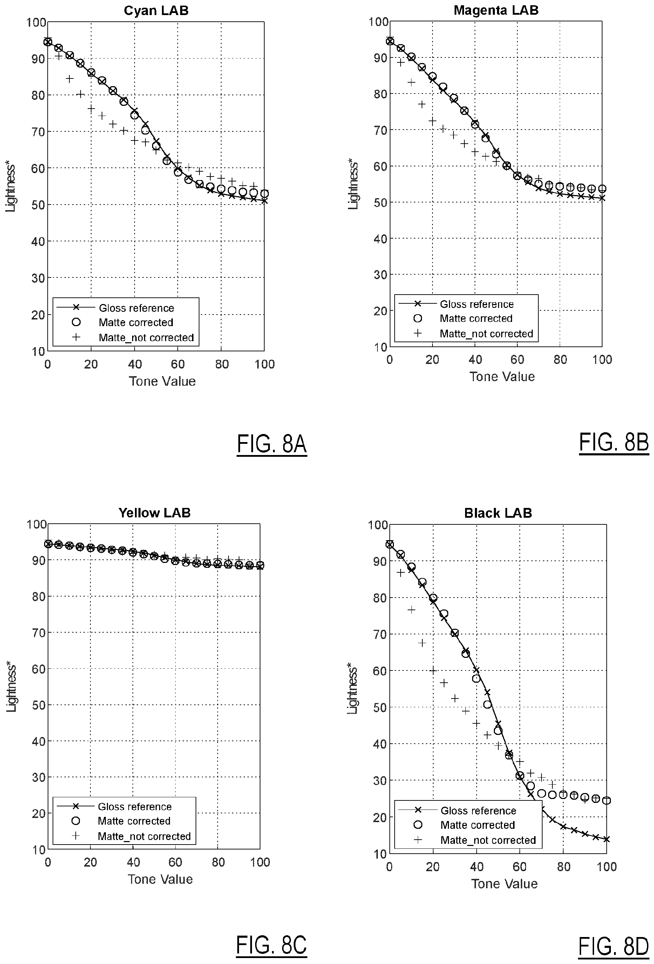

The embodiment that implements the correction mapping as part of the halftone masks was implemented in a prototype. Figures 8A-D, 9A-D, and 10A-D show the measured colour responses for gloss and matt print modes. Figure 8A-D show respectively the measured L*A*B* lightness* for the four process colours (Cyan, Magenta, Yellow, and Black) and allows for the comparison of the measured Lightness* for gloss (marked "o") and matt (marked "×"). The measurements for uncorrected matt (marked "+") are additionally provided for comparison purposes.

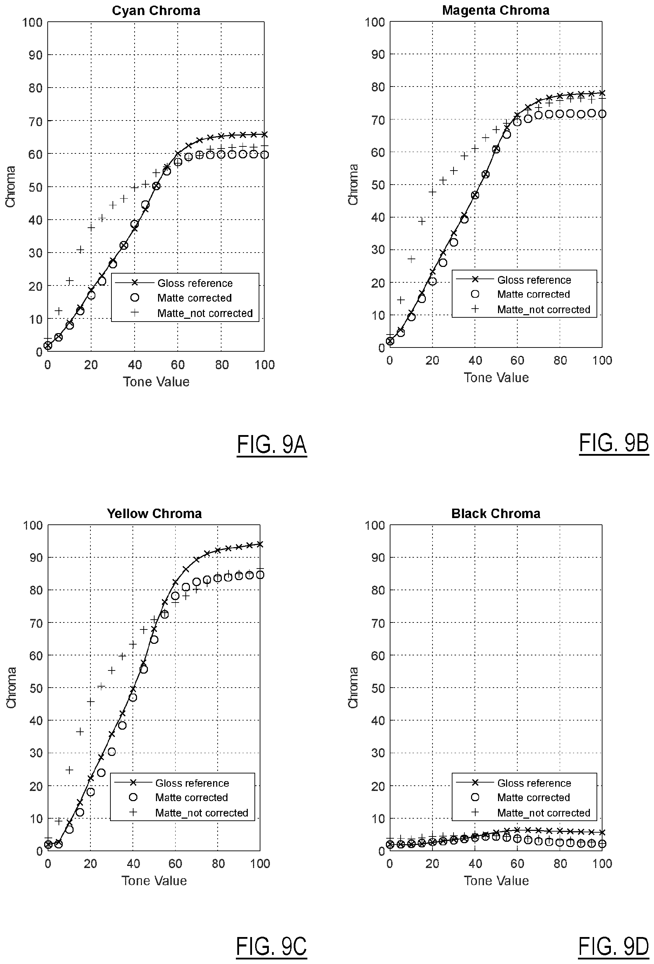

Figures 9A-D show chroma measurements for the four process colours, again showing gloss (marked "○") and matt (marked "×") as well as the measurements for uncorrected matt (marked "+") are additionally provided for comparison purposes.

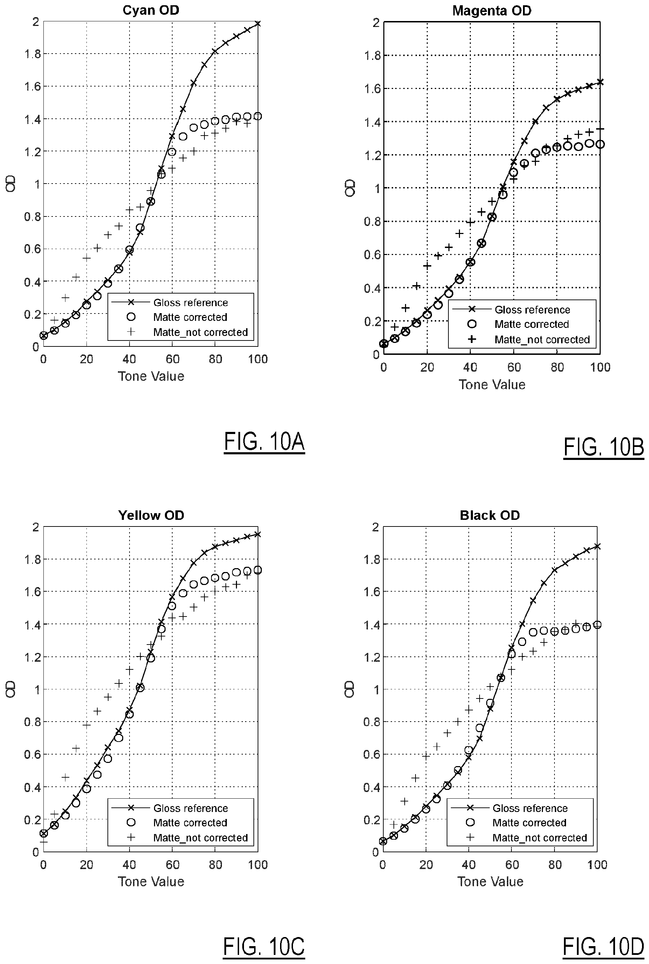

Figures 10A-D show the optical density measurements for the four process colours. In accordance with the desire to retain a sufficiently wide colour gamut, it can be seen that at higher coverages (tone values) the optical densities for gloss and matt start to deviate, the optical density for gloss reaching a higher optical density.

Such deviations are also, although to a much lesser degree, observable in the Lightness* measurements (mainly cyan) and chrome (mainly magenta).

From Figures 8A-D, 9A-D, and 10A-D it can be concluded that the colours for different print modes can be matched quite efficiently with a correction mapping $f_c$ according to the invention, with-in the case of different glossiness levels-the exception of colours with high optical densities, which is however a deliberate trade off. As already mentioned colours can also be matched at high optical densities, but at the expense of colour gamut.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. In particular, features presented and described in separate dependent claims may be applied in combination and any advantageous combination of such claims are herewith disclosed.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. Method for matching colours between different print modes in a printing system, the method comprising the steps of:

   - when printing in a first print mode, mapping colours specified in first image data to colours to be specified in second image data according to a first mapping; and
   - when printing in a second print mode, mapping colours specified in the first image data to colours to be specified in the second image data by applying a correction mapping in conjunction with the first mapping.

2. The method according to claim 1, wherein the printing system switches between the first and second print mode during the printing of a print job.

3. The method according to claim 1, wherein the printing system switches between the first and second print mode during printing of an image.

4. The method according to claim 1, 2, or 3 wherein one or both of the first mapping and the correction mapping is executed as part of at least one of:

   - an image processing step prior to the rasterisation (RIP) of the image,
   - the rasterisation, and
   - the halftoning.

5. The method according to any of claims 1-4, wherein the correction mapping further comprises a prelinearisation correction.

6. The method according to any of claims 1-5, wherein the first and second print mode distinguish in an amount of glossiness.

7. The method according to any of claims 1-5, wherein the second print mode comprises the step of printing varnish.

8. Computer program product stored on a computer

**EP 4 274 206 A1**

readable medium that, when executed on a processor comprised in or connected to a printing system, performs the method according to any of claims 1-7.

9. Printing system comprising a colour management module configured to perform a colour mapping operation on first image data to be printed, wherein the colour mapping operation performs

   - for a first print mode a first mapping for mapping colours specified in the first image data to colours to be specified in second image data for printing the first image data according to a first print mode; and
   - for a second print mode a correction mapping for mapping colours and applying the correction mapping in conjunction with the first mapping to map colours specified in the first image data to colours to be specified in the second image data for printing the first image data according to a second print mode.

10. The printing system according to claim 9, wherein the printing system switches between the first and second print mode during the printing of a print job.

11. The printing system according to claim 9, wherein the printing system switches between the first and second print mode during printing of an image.

12. The printing system according to claim 9, 10, or 11 wherein at least one of the first mapping and the correction mapping is executed as part of at least one of:

   - an image processing step prior to the rasterisation (RIP) of the image,
   - the rasterisation, and
   - the halftoning.

13. The printing system according to any of claims 9-12, wherein the correction mapping further comprises a prelinearisation correction.

14. The printing system according to any of claims 9-13, wherein the print mode determines an amount of glossiness of the image part printed with the print mode.

15. The printing system according to any of claims 9-14, wherein the second print mode comprises the step of printing varnish.

FIG. 1

FIG. 2

FIG. 3

FIG. 4

Measured gloss and (prelinearised) matt OD, calculated matt OD

FIG. 5

Measured gloss and (not prelinearised) matt OD, calculated matt OD

FIG. 6

FIG. 7

FIG. 8A

FIG. 8B

FIG. 8C

FIG. 8D

FIG. 9A

FIG. 9B

FIG. 9C

FIG. 9D

14

FIG. 10A

FIG. 10B

FIG. 10C

FIG. 10D

15

Europäisches
Patentamt

European
Patent Office

Office européen
des brevets

# EUROPEAN SEARCH REPORT

**Application Number**

EP 22 17 1596

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2009/251715 A1 (KITA HIROSHI [JP]) 8 October 2009 (2009-10-08) * the whole document * * figures 11,17 * * paragraphs [0080] - [0099] * | 1-15 | INV. H04N1/60 H04N1/54 |
| X | EP 2 999 206 A1 (FUJIFILM CORP [JP]) 23 March 2016 (2016-03-23) | 1,4,8,9, 12 | |
| Y | * figure 13 * * paragraphs [0178], [0196], [0213] - [0220] * | 1-15 | |
| Y | EP 0 688 131 A2 (CANON KK [JP]) 20 December 1995 (1995-12-20) * the whole document * * figure 17 * * C19L47-C20L16 * | 2,3,10, 11 | |
| Y | SAMADZADEGAN SEPIDEH ET AL: "Controlling colour-printed gloss by varnish-halftones", PROCEEDINGS OF SPIE, IEEE, US, vol. 9398, 13 March 2015 (2015-03-13), pages 93980V-93980V, XP060050835, DOI: 10.1117/12.2080805 ISBN: 978-1-62841-730-2 * the whole document * * page abstract * * Title * * P1 last line - P2 4th line. * | 7,15 | |

**TECHNICAL FIELDS SEARCHED (IPC)**

H04N

The present search report has been drawn up for all claims

| Place of search | Date of completion of the search | Examiner |
|---|---|---|
| The Hague | 6 October 2022 | Thollot, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 1596

This annex lists the patent family members relating to the patent documents cited in  the above-mentioned European search report.
The members are as contained in the European Patent Office EDP file on
The European Patent Office is in no way liable for these particulars which are merely given for the purpose of information.

06-10-2022

| Patent document cited in search report | | | Publication date | Patent family member(s) | | | Publication date |
|---|---|---|---|---|---|---|---|
| US 2009251715 | A1 | | 08-10-2009 | EP | 2107427 | A1 | 07-10-2009 |
| | | | | EP | 3264187 | A1 | 03-01-2018 |
| | | | | JP | 2009251229 | A | 29-10-2009 |
| | | | | US | 2009251715 | A1 | 08-10-2009 |
| EP 2999206 | A1 | | 23-03-2016 | EP | 2999206 | A1 | 23-03-2016 |
| | | | | US | 2016080607 | A1 | 17-03-2016 |
| EP 0688131 | A2 | | 20-12-1995 | DE | 69534125 | T2 | 16-02-2006 |
| | | | | EP | 0688131 | A2 | 20-12-1995 |
| | | | | US | 6106093 | A | 22-08-2000 |

EPO FORM P0459

For more details about this annex : see Official Journal of the European Patent Office, No. 12/82